# EUROPÄISCHE PATENTSCHRIFT

(11) **EP 1 776 517 B1**
(45) Veröffentlichungstag und Bekanntmachung des Hinweises auf die Patenterteilung: **22.04.2009**
(21) Anmeldenummer: 05759704.9
(22) Anmeldetag: 07.07.2005
(51) Int. Cl.: F02D 9/04, F16K 1/226

(54) **KLAPPENVENTIL FÜR DIE ABGASANLAGE EINES KRAFTFAHRZEUGES**
FLAP VALVE FOR A MOTOR VEHICLE EXHAUST SYSTEM
VALVE A CLAPET POUR SYSTEME DE GAZ D'ECHAPPEMENT D'UN VEHICULE A MOTEUR

(30) Priorität: 07.07.2004 DE 102004032856
(43) Veröffentlichungstag der Anmeldung: 25.04.2007
(73) Patentinhaber: Faurecia Abgastechnik GmbH, 90765 Fürth (DE)
(72) Erfinder: UNBEHAUN, Martin, 90409 Nürnberg (DE); ROUAUD, Yohann, 44850 St Mars du Desert (FR); HILDEBRAND, Matthias, 90765 Fürth (DE)
(74) Vertreter: Mörtel & Höfner
(86) Internationale Anmeldenummer: PCT/EP2005/007332
(87) Internationale Veröffentlichungsnummer: WO 2006/003016

(56) Entgegenhaltungen:
- EP-A- 0 023 953
- EP-A- 0 821 148
- EP-A- 0 821 191
- EP-A- 0 835 998
- EP-A- 1 291 509
- CH-A- 207 290
- US-A- 3 076 657
- US-A- 5 630 571

## Beschreibung

Die Erfindung betrifft ein Klappenventil für die Abgasanlage eines Kraftfahrzeuges. Ein solches, beispielsweise aus EP 0 835 998 B1 bekanntes Ventil wird allgemein als Sperrorgan in verzweigten Abgasanlagen eingesetzt. Es weist ein Ventilgehäuse auf, in dem eine Klappe um eine quer zur Mittellängsachse des Ventilgehäuses bzw. quer zu einem von diesem umgrenzten Strömungskanal verlaufenden Welle drehbar gelagert ist. Die Ventilklappe ist dabei zwischen einer die Innenquerschnittsfläche des Ventilgehäuses überdeckenden Schließstellung und einer diese freigebenden Öffnungsstellung schwenkbar. Außen am Ventilgehäuse ist ein Lagergehäuse gasdicht angebracht, etwa angeschweißt. Die Welle ragt über eine erste Öffnung im Ventilgehäuse in das Lagergehäuse ein und über eine zweite Öffnung im Lagergehäuse aus diesem wieder aus. Innerhalb des Lagergehäuses ist die Welle von einem Lagerring umfasst, der eine zur Klappe weisende quer zur Welle ausgerichtete federbeaufschlagte Stützfläche und eine von der Klappe weg weisende, mit einem die zweite Öffnung umgrenzenden Innenwandbereich des Lagergehäuses im Sinne einer Gleitpaarung zusammen wirkende Gleitfläche aufweist. Diese wird durch ein die Welle umgreifendes Federelement an den genannten Innenwandbereich gedrückt, welches sich einerseits an der Stützfläche und andererseits mittel- oder unmittelbar an der Welle abstützt. Bei einem solchen Klappenventil ist das Material des Lagerrings so gewählt, dass bei einer Drehbetätigung der Welle möglichst geringe Reibungskräfte zu überwinden sind, trotzdem aber eine ausreichende Abdichtung gewährleistet, also verhindert ist, dass Abgas über den zwischen Lagering und dem Innenwandbereich des Lagergehäuses vorhandenen Trennspalt nach außen gelangen kann. Materialien, die diese Anforderungen erfüllen, etwa keramische Materialien, weisen in der Regel eine geringere Wärmedehnung auf als das Material der Welle, beispielsweise rostfreier Stahl. Im Betrieb werden im Lagergehäuse Temperaturen von 600°C und mehr erreicht. Um bei einer derartigen Erwärmung eine Radialausdehnung der Welle zu ermöglichen, ohne dass dabei der Lagerring zerstört wird, ist ein entsprechend großes Spiel zwischen den genannten Teilen vorzusehen. Als Folge dieses Spiels können jedoch Abgase zwischen Welle und Lagering nach außen gelangen. Bei dem aus EP 0 835 998 B1 bekannten Klappenventil wird eine derartige Abgasleckage durch Verwendung eines Tellerfederstapels als Federelement verhindert. Die einzelnen Tellerfedern liegen jeweils mit ihren Innen- bzw. Außenrändern mehr oder weniger gasdicht aufeinander auf und bilden somit einen Zylinder mit einer geschlossenen Zylinderwand. Die beiden äußeren Tellerfedern liegen plan eben an der Stützfläche des Lagerrings bzw. an einer Gegenfläche an der Welle dichtend an. Der zwischen dem Lagerring und der Gegenfläche angeordnete Bereich der Welle ist somit im Wesentlichen gasdicht abgedichtet, so dass kein Abgas durch den aufgrund des Lagerspiels zwischen Lagerring und Welle vorhandene Ringspalt nach außen gelangen kann.

Aufgabe der Erfindung ist es, ein Klappenventil vorzuschlagen, das ohne teuere Tellerfedern auskommt, wobei aber dennoch ein Austritt von Abgas über den Ringspalt zwischen Lagerring und Welle verhindert oder zumindest verringert ist.

Diese Aufgabe wird nach Anspruch 1 dadurch gelöst, dass als Federelement eine in Richtung der Mittellängsachse (10) komprimierte Mineralfasermatte vorhanden ist. Solche Matten, insbesondere wenn es sich um Matten handelt, die zur Lagerung von Monolithen in Abgasanlagen von Kraftfahrzeugen verwendet werden, erzeugen im komprimierten Zustand Rückstellkräfte, die denen einer Schraubenfeder oder einem Tellerfederstapel gleich kommen und ausreichend sind, den Lagerring mit genügend großer Kraft gegen das Lagergehäuse zu pressen und die erforderliche Dichtigkeit zu gewährleisten. Im komprimierten Zustand sind die Fasern dieser Matten derart dicht zusammengepresst, dass ein Durchtritt von Abgas allenfalls in einem unerheblichen Ausmaß zu beobachten ist.

Vorzugsweise werden Matten mit polykristallinen Fasern verwendet. Diese sind hochtemperaturbeständig und können bei Temperaturen von über 1000 °C eingesetzt werden. Polykristalline Fasern sind Fasern mit einem Aluminiumoxidgehalt von > 63 Gew.% und werden im Sol-Gel-Verfahren aus wässerigen Spinnlösungen erzeugt. Bevorzugte Matten entfalten 80 bis 99 Gew.% polykristalline Fasern. Zur Erleichterung der Handhabung und Montage werden polykristalline und auch andere Mineralfasermatten verwendet, die einen organischen Binder, vorzugsweise einen Binder auf Acrylbasis enthalten. Solche Binder und auch andere organische Binder, die mit einem Anteil von 1 bis 20 Gew.% enthalten sind, verbrennen bei den vorherrschenden Betriebstemperaturen nahezu rückstandsfrei

Ein Material für den Lagerring, das sowohl gute Gleit- als auch Dichteigenschaften bei Zusammenwirkung mit einer metallischen Fläche, also dem oben erwähnten Innenwandbereich des Lagergehäuses aufweist, ist ein Keramikmaterial. Dieses weist naturgemäß eine wesentlich kleinere Wärmeausdehnung auf als die metallische, etwa aus rostfreiem Stahl bestehende Welle. Deswegen ist zwischen Welle und dem Lagerring ein entsprechend großes Spiel erforderlich, um ein ungehindertes radiales Ausdehnen der Welle bei hohen Temperaturen zu gewährleisten. Der Lagerring kann ganz aus Keramikmaterial sein. Denkbar ist.aber auch, dass nur ein die Gleitfläche tragender Bereich aus Keramit besteht.

Das Federelement kann sich direkt an der Welle abstützen. Dazu ist an dieser eine sich nach außen erstreckende Radialschulter vorhanden. Vorzugsweise ist jedoch zwischen dem Federelement und der Radialschulter eine die Welle umgreifende Buchse vorhanden, welche mit ihrer Umfangsfläche mit der Innenfläche des Lagergehäuses im Sinne einer Gleitpaarung zusammenwirkt. Da die Buchse ein separates Teil ist, kann sie aus einem Material gefertigt werden, welches gegenüber dem metallischen Lagergehäuse geringere Reibbeiwerte aufweist als dies bei einer Metall-Metall-Reibpaarung der Fall wäre. Vorzugsweise wird eine Buchse aus Keramikmaterial eingesetzt.

Die Erfindung wird nun anhand eines in den beigefügten Zeichnungen dargestellten Ausführungsbeispiels näher erläutert. Es zeigen:
- Fig. 1: einen Querschnitt durch ein Klappenventil
- Fig. 2: das Detail II aus Fig. 1
- Fig. 3: A bis C Abbildungen entsprechend Fig. 2, welche unterschiedliche Gleitpaarungen zwischen Lagerring und Lagergehäuse darstellen.

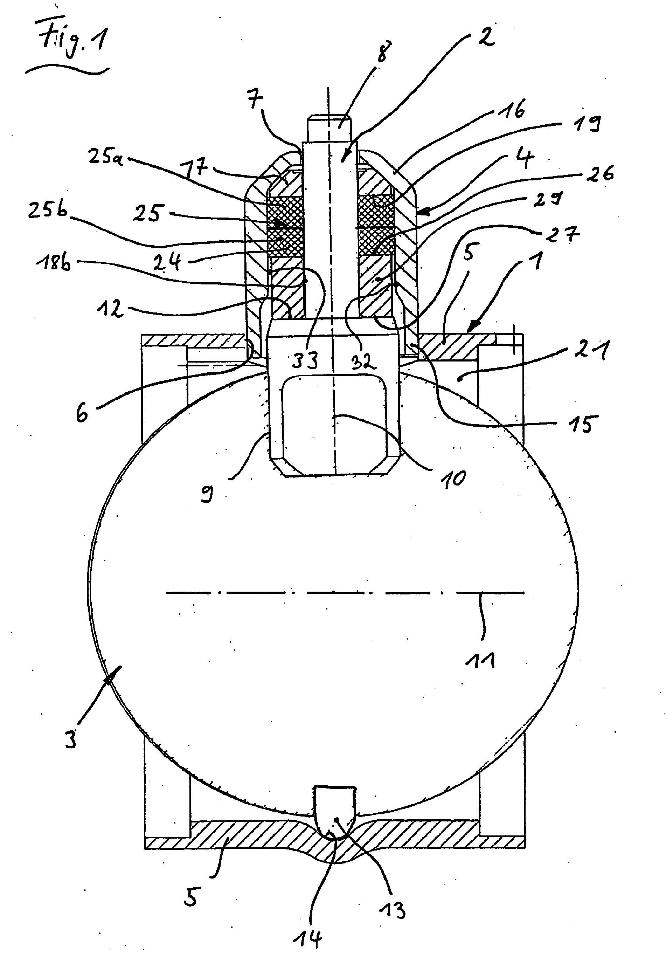

Wie Fig. 1 zeigt, umfasst ein Klappenventil ein als Rohrabschnitt ausgebildetes Ventilgehäuse 1, eine darin angeordnete, mit Hilfe einer Welle 2 drehbar gelagerte Ventilklappe 3 und ein Lagergehäuse 4. Die Welle 2 erstreckt sich quer zur Mittellängsachse 11 des Ventilgehäuses 1 bzw. des von diesem umschlossenen Strömungskanals 21. Die Wand 5 des einen kreisförmigen Innenquerschnitt aufweisenden Ventilgehäuses 1 ist von einer ersten Öffnung 6 durchbrochen. Über diese Öffnung erstreckt sich die Welle 2 in das Lagergehäuse 4 hinein. Im Lagergehäuse 4 ist eine zweite Öffnung 7 vorhanden, die von dem der Ventilklappe 3 abgewandten, äußeren Ende 8 der Welle durchsetzt ist. Das innere Ende 9 der Welle 2 ist radial verbreitert, wobei der Übergang zwischen dem engerem und dem breiteren Wellenteil als eine sich rechtwinklig zur Mittellängsachse 10 der Welle 2 erstreckende Radialschulter 12 ausgebildet ist. Das innere Ende 9 der Welle 2 trägt die Ventilklappe 3. Dazu weist das Ende 9 einen Axialschlitz (nicht dargestellt) auf, in welchem die Ventilklappe 3 mit einem Randbereich eingesteckt und etwa durch eine Verschweißung fixiert ist. An einer dem inneren Ende 9 diametral gegenüberliegenden, von der Mittellängsachse 10 durchstoßenen Stelle ist an der Ventilklappe 3 ein Lagerzapfen 13 fixiert, der in einer napfförmigen Ausbuchtung 14 in der Wand 5 des Ventilgehäuses 1 eingreift.

Das etwa hülsenförmige Lagergehäuse 4 ist mit seinem dem Innenraum des Ventilgehäuses 1 zugewandten Ende 15 in die erste Öffnung 6 des Ventilgehäuses eingesetzt und mit der Wand 5 verschweißt. Der sich etwa an die zweite Öffnung 7 anschließende Bereich des Lagergehäuses 4 ist in Form eines sich zur Klappe 3 hin öffnenden Konus 16 ausgebildet. In diesem Bereich des Lagergehäuses 4 ist ein Lagerring 17 aus einem Keramikmaterial angeordnet. Der Lagerring 17 umgreift die Welle 2 unter Freilassung eines Ringspalts 18. Der Ringspalt 18 ist dabei so bemessen, dass sich die Welle bei einer Erhitzung während des Fahrzeugbetriebs auf Temperaturen von > 600°C radial ausdehnen kann, ohne dabei den Lagerring 17 radial aufzuweiten, was aufgrund des spröden Keramikmaterials dessen Zerstörung zur Folge hätte. Der Lagerring 17 weist eine der Ventilklappe 3 zugewandte, quer zur Mittellängsachse 10 verlaufende planebene Stützfläche 19 auf. Weiterhin ist am Lagerring 17 eine von der Ventilklappe 3 wegweisende Gleitfläche 20 vorhanden, welche mit dem Innenwandbereich 22 des Konus 16 bzw. des Lagergehäuses 4 im Sinne einer Gleitpaarung zusammenwirkt. Die Gleitfläche 20 ist gekrümmt und Teil einer Kugel- oder Torusfläche. Aufgrund dieser Ausgestaltung ist zwischen dem Innenwandbereich 22 und der Gleitfläche 20 nur ein schmaler, nahezu linienförmiger Berührungsbereich 23 vorhanden.

In dem zwischen der Welle 2 und der Innenwand des Lagergehäuses 4 vorhandenen Ringraum 24 ist eine Mineralfasermatte 25 angeordnet. Es handelt sich dabei um eine Matte mit Polykristallinen Fasern. Eine solche auch für die Lagerung von Monolithen verwendete Matte ist unter dem Handelsnamen Maftec der Firma Thermal Ceramics, US erhältlich. Es handelt sich dabei um eine Matte mit 80 bis 99 Gew.% polykristallinen Fasern, welche einen Anteil von mehr als 63 Gew.% Aluminiumoxid aufweisen. Die Fasern sind mit 1 bis 20 Gew.% Acrylat-Binder miteinander verbunden. Die Mineralfasermatte 25 ist so im Ringraum 24 angeordnet, dass ihre Fasern im wesentlichen quer zur Welle 2 bzw. zu deren Mittellängsachse 10 verlaufen. Im komprimierten Zustand stützt sich die Mineralfasermatte 25 einerseits an der Stützfläche 19 des Lagerings 17 und andererseits der der Ventilklappe 3 abgewandten Stirnseite 26 einer die Welle 2 umfassende Buchse 29 ab. Diese wiederum liegt mit ihrer anderen Stirnseite 27 planeben an der Radialschulter 12 an. Bei einem konkreten Ausführungsbeispiel hat der Ringraum 24 eine Höhe 28 von 8mm, einen Außendurchmesser 36 (entspricht Innendurchmesser des Lagergehäuses im Bereich der Mineralfasermatte) von 14mm und einen Innendurchmesser 37 (entspricht Durchmesser der Welle 2) von 6mm. In den Ringraum 24 sind zwei aus einem Mattenzuschnitt ausgestanzte Mattenringe 25a, 25b eingepresst, die eine Ausgangsdicke von je 8 bis 9mm und ein Flächengewicht von 1200g/m² besitzen. Der Außendurchmesser der nicht komprimierten Mattenringe 25a, 25b beträgt 14mm, deren Innendurchmesser 5,5 mm. Aufgrund dieser Abmessungen lassen sich die Mattenringe 25a, 25b problemlos in den Ringraum 24 einführen, füllen aber diesen vollständig aus. Die Ausgangsdichte der Mattenringe 25a, 25b beträgt ca. 160kg/m³, wogegen nach der axialen Kompression die Matte eine Nenndichte von ca. 320kg/m³ aufweist. Im komprimierten Zustand der aus zwei Teilen bestehenden Mineralfasermatte 25 wird eine Flächenpressung von ca. 12N/cm² und eine Federkraft von ca. 18N erreicht. Diese Federkraft reicht aus, um den Lagerring 17 mit seiner Gleitfläche 20 so gegen den Innenwandbereich 22 des Lagergehäuses 4 zu pressen, dass eine ausreichende Dichtigkeit gewährleistet ist. Die Mineralfasermatte 25 erfüllt ihre Dichte- sowie ihre Federfunktion noch bei Temperaturen von über 1000°C. Dabei werden Leckagen von weniger als 21/min bei 300 mbar erreicht.

Die Buchse 29 umfasst die Welle 2 ebenfalls unter Freilassung eines Ringspalts 18b, um die oben erwähnte Radialausdehnung der Welle 2 zu ermöglichen. Der Außendurchmesser der Buchse 29 und der Innendurchmesser eines die Buchse umgreifenden Innenwandbereiches 32 des Lagergehäuses 4 sind so bemessen, dass auch im kalten Zustand ein Ringspalt 33 zwischen den genannten Teilen vorhanden ist. Für den Fall, dass trotz dieses Ringspaltes die Buchse 29 mit dem Innenwandbereich in Berührung kommt, werden die Drehbetätigungskräfte für die Welle 2 aufgrund der geringen Reibung zwischen dem Keramikmaterial der Buchse 29 und dem metallischen Lagergehäuse 4 nur unwesentlich erhöht.

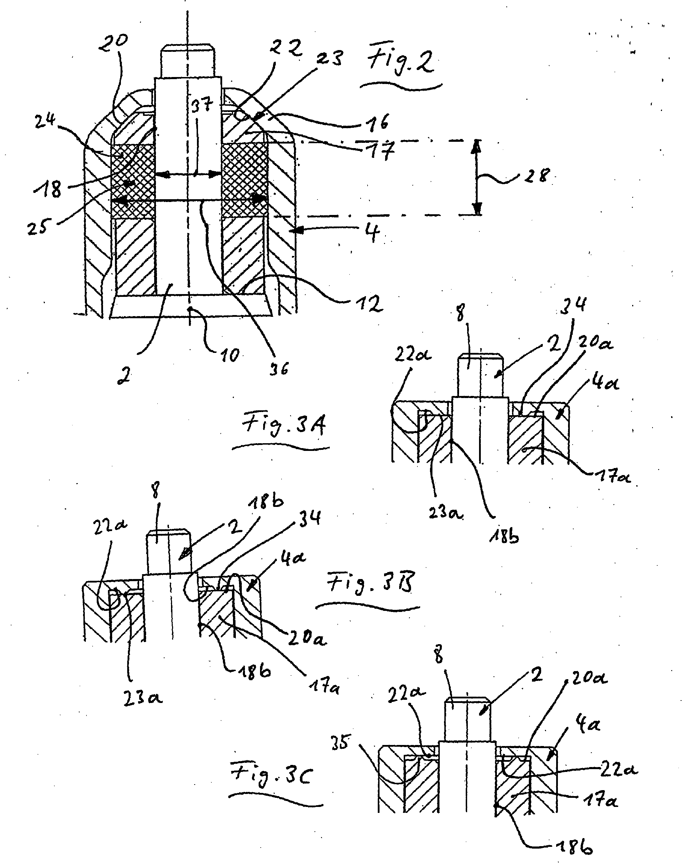

Fig. 3a bis 3c zeigen ein Lagergehäuse 4a dessen mit dem Lagerring 17a zusammen wirkender Innenwandbereich 22a sich nicht schräg sondern rechtwinklig zur Mittellängsachse 10 der Welle 2 erstreckt. Die Gleitfläche 20a des Lagerrings 17a erstreckt sich parallel zum Innenwandbereich 22a. Der Innenwandbereich 22a und die Gleitfläche 20a liegen jedoch nicht mit ihrer gesamten Fläche sondern nur mit einem kleineren Berührungsbereich 23a aneinander an. Dies wird dadurch bewerkstelligt, dass entweder von der Gleitfläche 20a oder vom Innenwandbereich 22a ein mit der jeweils anderen Fläche im Sinne einer Gleitpaarung zusammen wirkender Ringvorsprung 34 bzw. 35 vorsteht.

### Bezugszeichenliste

- 1: Ventilgehäuse
- 2: Welle
- 3: Ventilklappe
- 4: Lagergehäuse
- 5: Wand
- 6: erste Öffnung
- 7: zweite Öffnung
- 8: äußeres Ende
- 9: inneres Ende
- 10: Mittellängsachse
- 11: Mittellängsachse
- 12: Radialschulter
- 13: Lagerzapfen
- 14: Ausbuchtung
- 15: Ende
- 16: Konus
- 17: Lagerring
- 18: Ringspalt
- 19: Stützfläche
- 20: Gleitfläche
- 21: Strömungskanal
- 22: Innenwandbereich
- 23: Berührungsbereich
- 24: Ringraum
- 25: Mineralfasermatte
- 25a: Mattenring
- 26: Stirnseite
- 27: Stirnseite
- 28: Höhe
- 29: Buchse
- 30: Umfangsfläche
- 32: Innenwandbereich
- 33: Ringspalt
- 34: Ringvorsprung
- 35: Ringvorsprung
- 36: Außendurchmesser
- 37: Innendurchmesser

## Patentansprüche

1. Klappenventil für die Abgasanlage eines Kraftfahrzeugs, mit einem Ventilgehäuse (1), in dem eine Ventilklappe (3) um eine quer zu dessen Mittellängsachse (11) verlaufenden Welle (2) zwischen einer dessen Innenquerschnittsfläche überdeckenden Schließstellung und einer diese freigebenden Öffnungsstellung schwenkbar ist, mit folgender weiterer Ausgestaltung:
- außen am Ventilgehäuse (1) ist ein Lagergehäuse (4) gasdicht angebracht,
- die Welle (2) ragt über eine erste Öffnung (6) im Ventilgehäuse (1) in das Lagergehäuse (4) hinein und tritt über eine zweite Öffnung (7) im Lagergehäuse (4) aus diesem wieder aus,
- innerhalb des Lagergehäuses (4) ist die Welle (2) von einem Lagerring (17) umfasst, der eine zur Ventilklappe (3) weisende, quer zur Welle (2) ausgerichtete Stützfläche (19) und eine von der Ventilklappe (3) weg weisende, mit einem die zweite Öffnung (7) umgrenzenden Innenwandbereich (22) des Lagergehäuses (4) im Sinne einer Gleitpaarung zusammenwirkende Gleitfläche (20) aufweist,
- zumindest ein die Gleitfläche (20) aufweisender Bereich des Lagerrings (17) besteht aus einem Material, das eine geringere Wärmedehnung aufweist als das Material der Welle (2),
- im Lagergehäuse (4) ist ein die Welle (2) umgreifendes, sich einerseits an der Stützfläche (19) und andererseits mittel- oder unmittelbar an einer Radialschulter (12) der Welle (2) axial abstützendes Federelement angeordnet,
**dadurch gekennzeichnet,**
**dass** als Federelement wenigstens eine in Richtung der Mittellängsachse (10) komprimierte Mineralfasermatte (25) vorhanden ist.

2. Klappenventil nach Anspruch 1,
**dadurch gekennzeichnet**,
eine zur Lagerung von Monolithen in Abgasanlagen von Kraftfahrzeugen verwendete Mineralfasermatte (25).

3. Klappenventil nach Anspruch 1 oder 2,
**gekennzeichnet durch**
eine Mineralfasermatte (25) mit polykristallinen Fasern.

4. Klappenventil nach Anspruch 3,
**dadurch gekennzeichnet,**
**dass** die Mineralfasermatte (25) 80 bis 99 Gew.% polykristalline Fasern enthält.

5. Klappenventil nach einem der Ansprüche 1 bis 4,
**dadurch gekennzeichnet,**
**dass** die Mineralfasermatte (25) 1 bis 20 Gew. % organischen Binder enthält.

6. Klappenventil nach Anspruch 5,
**dadurch gekennzeichnet,**
**dass** ein Binder auf Acrylbasis enthalten ist.

7. Klappenventil nach einem der Ansprüche 1 bis 6,
**dadurch gekennzeichnet,**
**dass** zumindest ein die Gleitfläche (20) aufweisender Bereich des Lagerrings (17) aus einem Keramikmaterial besteht.

8. Klappenventil nach einem der Ansprüche 1 bis 7,
**dadurch gekennzeichnet,**
**dass** sich das vom Lagerring (17) weg weisenden Ende des Federelements unter Zwischenlage einer die Welle (2) umgreifenden Buchse (29) an einer Radialschulter (12) der Welle (2) abstützt, wobei die Buchse (29) mit ihrer Umfangsfläche mit der Innenfläche des Lagergehäuses (4) im Sinne einer Gleitpaarung zusammenwirkt.

9. Klappenventil nach Anspruch 8,
**dadurch gekennzeichnet,**
**dass** die Buchse (29) aus einem Keramikmaterial besteht.

## Claims

1. Flap valve for a motor vehicle exhaust system, with a valve housing (1), in which a valve flap (3) is pivotable about a shaft (2), running transversely with respect to the center longitudinal axis (11) of said valve housing, between a closing position covering the inner cross-sectional area of the latter and an opening position releasing said inner cross-sectional area, with the following further configuration:
- a bearing housing (4) is mounted, gastight, on the outside of the valve housing (1),
- the shaft (2) projects via a first orifice (6) in the valve housing (1) into the bearing housing (4) and emerges via a second orifice (7) in the bearing housing (4) from the latter again,
- within the bearing housing (4), the shaft (2) is surrounded by a bearing ring (17) which has a supporting surface (19) pointing toward the valve flap (3) and oriented transversely with respect to the shaft (2) and a sliding surface (20) pointing away from the valve flap (3) and cooperating with the effect of a slide pairing with an inner wall region (22) of the bearing housing (4), said inner wall region delimiting the second orifice (7),
- at least one region, having the sliding surface (20), of the bearing ring (17) consists of a material which has a lower thermal expansion than the material of the shaft (2),
- in the bearing housing (4) is arranged a spring element which surrounds the shaft (2) and which is axially supported, on the one hand, on the supporting surface (19) and, on the other hand, indirectly or directly on a radial shoulder (12) of the shaft (2),
**characterized in that** at least one mineral fiber mat (25) compressed in the direction of the center longitudinal axis (10) is present as a spring element.

2. Flap valve according to claim 1, **characterized by** a mineral fiber mat (25) used for the mounting of monoliths in exhaust systems of motor vehicles.

3. Flap valve according to claim 1 or 2, **characterized by** a mineral fiber mat (25) with polycrystalline fibers.

4. Flap valve according to claim 3, **characterized in that** the mineral fiber mat (25) contains 80 to 99% by weight of polycrystalline fibers.

5. Flap valve according to one of claims 1 to 4, **characterized in that** the mineral fiber mat (25) contains 1 to 20% by weight of organic binder.

6. Flap valve according to claim 5, **characterized in that** a binder on an acrylic base is contained.

7. Flap valve according to one of claims 1 to 6, **characterized in that** at least one region, having the sliding surface (20), of the bearing ring (17) consists of a ceramic material.

8. Flap valve according to one of claims 1 to 7, **characterized in that** that end of the spring element which points away from the bearing ring (17) is supported on a radial shoulder (12) of the shaft (2), with a bush (29) surrounding the shaft (2) being interposed, the bush (29) with its circumferential surface cooperating with the inner surface of the bearing housing (4) with the effect of a slide pairing.

9. Flap valve according to claim 8, **characterized in that** the bush (29) consists of a ceramic material.

## Revendications

1. Soupape à clapet pour le système de gaz d'échappement d'un véhicule à moteur, comportant un corps (1) de soupape, dans lequel un clapet (3) de soupape peut basculer autour d'un arbre (2) s'étendant transversalement à l'axe (11) longitudinal central du clapet entre une position de fermeture de recouvrement de la surface de section transversale intérieure du clapet et une position d'ouverture libérant cette surface, ayant les caractéristiques supplémentaires suivantes :
- un carter (4) de palier est monté de manière étanche au gaz à l'extérieur sur le corps (1) de soupape,
- l'arbre (2) pénètre par une première ouverture (6) formée dans le corps (1) de soupape dans le carter (4) de palier et en ressort par une deuxième ouverture (7) formée dans le carter (4) de palier,
- à l'intérieur du carter (4) de palier, l'arbre (2) est entouré par une bague (17) de palier, qui comporte une surface (19) d'appui, orientée transversalement à l'arbre (2) et tournée vers le clapet (3) de soupape, et une surface (20) de glissement tournée à l'opposé du clapet (3) de soupape et coopérant au sens d'un appariement de glissement avec une zone (22) de paroi intérieure du carter (4) de palier, qui entoure la deuxième ouverture (7),
- au moins une zone de la bague (17) de palier, qui comporte la surface (20) de glissement, est en un matériau qui a un coefficient de dilatation plus petit que celui du matériau de l'arbre (2),
- dans le carter (4) de palier, est disposé un élément élastique qui entoure l'arbre (2) et qui porte de manière axiale d'une part sur la surface (19) d'appui et d'autre part directement ou indirectement sur un épaulement (12) radial de l'arbre (2),
**caractérisée en ce que**
il est prévu en tant qu'élément élastique au moins un mat (25) de fibres minérales comprimé dans la direction de l'axe (10) longitudinal central.

2. Soupape à clapet suivant la revendication 1, **caractérisée par** un mat (25) de fibres minérales utilisé pour le montage de monolithes dans des systèmes de gaz d'échappement de véhicules à moteur.

3. Soupape à clapet suivant la revendication 1 ou 2, **caractérisée par** un mat (25) de fibres minérales comportant des fibres polycristallines.

4. Soupape à clapet suivant la revendication 3, **caractérisée en ce que** le mat (25) de fibres minérales contient de 80 à 99 % en poids de fibres polycristallines.

5. Soupape à clapet suivant l'une des revendications 1 à 4, **caractérisée en ce que** le mat (25) de fibres minérales contient de 1 à 20 % en poids de liant organique.

6. Soupape à clapet suivant la revendication 5, **caractérisée en ce qu'**il est inclus un liant à base d'acrylique.

7. Soupape à clapet suivant l'une des revendications 1 à 6, **caractérisée en ce qu'**au moins une zone de la bague (17) de palier, qui comporte la surface (20) de glissement, est constituée d'un matériau en céramique.

8. Soupape à clapet suivant l'une des revendications 1 à 7, **caractérisée en ce que** l'extrémité, tournée dans la direction opposée à la bague (17) de palier, de l'élément élastique s'appuie sur un épaulement (12) radial de l'arbre (2) avec interposition d'une douille (29) entourant l'arbre (2), la douille (29) coopérant par sa surface extérieure avec la surface intérieure du carter (4) de palier au sens d'un appariement de glissement.

9. Soupape à clapet suivant la revendication 8, **caractérisée en ce que** la douille (29) est en un matériau en céramique.
